# EUROPÄISCHE PATENTANMELDUNG

(11) **EP 3 907 485 A1**
(43) Veröffentlichungstag der Anmeldung: **10.11.2021**
(21) Anmeldenummer: 20173404.3
(22) Anmeldetag: 07.05.2020
(51) Int. Cl.: G01M 13/021, F03D 15/00, F03D 17/00, G05B 23/02

(54) **VERBESSERTES ÜBERWACHUNGSVERFAHREN FÜR EINE GETRIEBEKOMPONENTE**

(71) Anmelder: Flender GmbH, 46395 Bocholt (DE)
(72) Erfinder: Uhlending, Markus, 53859 Niederkassel (DE)
(74) Vertreter: Michalski Hüttermann & Partner Patentanwälte mbB

(57) **Zusammenfassung**

Die Erfindung betrifft ein Verfahren (100) zur Überwachung einer Getriebekomponente (10), das einen ersten Schritt (110) umfasst, in dem ein Erfassen zumindest einer Messgröße (22) während eines Betriebs der Getriebekomponente (10) erfolgt. In einem zweiten Schritt (120) wird ein Erfassen zumindest einer statistischen Größe (24) zu zumindest einer der Messgrößen (22) durchgeführt. Es folgt ein dritter Schritt (130), in dem ein Ermitteln zumindest einer abgeleiteten Zustandsgröße (26) der Getriebekomponente (10) mittels zumindest einer der Messgrößen (22) und der statistischen Größe (24) erfolgt. Es schließt sich ein vierter Schritt (140), in dem ein Ausgeben der abgeleiteten Zustandsgröße (26) erfolgt, und/oder ein Ausgeben einer Warnung (47), wenn die abgeleitete Zustandsgröße (26) einen einstellbaren Schwellenwert (38) überschreitet. Erfindungsgemäß wird zumindest eine der Messgrößen (22) und/oder die statistische Größe (24) in einem Binning-Speicher (42) gespeichert. Die Erfindung betrifft auch ein entsprechendes Computerprogrammprodukt (80) und eine korrespondierende Auswertungseinheit (40). Ebenso betrifft die Erfindung ein entsprechend ausgestattetes Getriebe (50) und eine Windkraftanlage (70) mit einem solchen Getriebe (50). Des Weiteren betrifft die Erfindung eine Verwendung eines solchen Verfahrens (100) zum Trainieren (57) einer Künstlichen Intelligenz (55).

## Beschreibung

Die Erfindung betrifft ein Überwachungsverfahren für eine Getriebekomponente, mit dem eine Prognose für den Zustand der Getriebekomponente durchführbar ist. Genauso betrifft die Erfindung eine Computerprogrammprodukt, mit dem das erfindungsgemäße Verfahren ausführbar ist. Die Erfindung betrifft auch eine dazu geeignete Auswertungseinheit für ein Getriebe, ein entsprechend ausgestattetes Getriebe und eine Windkraftanlage mit einem solchen Getriebe. Ferner betrifft die Erfindung die Verwendung eines derartigen Verfahrens zum Trainieren einer Künstlichen Intelligenz.

Aus US 6 609 051 B2 ist Verfahren zur Zustandsüberwachung von Fahrzeugen bekannt, in dem eine erste Version eines Verhaltensmodels einer Fahrzeugkomponente bereitgestellt wird. In einem weiteren Schritt werden Betriebsdaten der Fahrzeugkomponente erfasst und mit der ersten Version des Verhaltensmodells verglichen. Wenn eine Diskrepanz zwischen den Betriebsdaten und der ersten Version des Verhaltensmodells ermittelt wird, wird das Verhaltensmodell entsprechend angepasst.

Die Druckschrift US 9 369 445 B2 offenbart ein Verfahren zur Bin-Storage-Speicherung, bei dem ein Bin-Speicher mittels eines Public-Private-Schlüsselpaars auf einem Endgerät generiert wird. Anschließend wird ein zweiter Bin-Speicher auf einem Server generiert, wobei der Bin-Speicher auf dem Endgerät und der Bin-Speicher auf dem Server zu einer bidirektionalen Kommunikation miteinander ausgebildet sind.

In einer Vielzahl an technischen Anwendungen werden Getriebe eingesetzt, die unterschiedlichen Beanspruchungsregimen unterworfen sind. Daraus resultieren unterschiedliche Beanspruchungen und korrespondierende Verschleißzustände von Getriebekomponenten. Es besteht Bedarf an einer Möglichkeit, den aktuellen Zustand einer Getriebekomponente und ihre zu erwartende nutzbare Restlebensdauer zu ermitteln. Insbesondere besteht Bedarf an einem Verfahren, dass es erlaubt, in einfacher Weise eine große Datenmenge zu erfassen, auszuwerten, und basierend hierauf eine möglichst exakte Prognose über die zu erwartende nutzbare Restlebensdauer der entsprechenden Getriebekomponente zu erstellen. Gleichzeitig besteht Bedarf daran, dieses Verfahren in einfacher Weise auch auf Hardware mit geringer Rechenleistung durch zu können. Der Erfindung liegt die Aufgabenstellung zugrunde, ein Verfahren bereitzustellen, dass in zumindest einem der skizzierten Punkte eine Verbesserung bietet.

Die Aufgabenstellung wird durch ein erfindungsgemäßes Verfahren zur Überwachung einer Getriebekomponente gelöst. Das Verfahren ist auf eine Getriebekomponente anwendbar, durch die die Einsatztauglichkeit eines Getriebes bestimmt sein kann. Die Getriebekomponente kann beispielsweise eine Verzahnungskomponente, also ein Zahnrad, oder eine Welle, oder ein Lager sein. In einem ersten Schritt des Verfahrens erfolgt ein Erfassen zumindest einer Messgröße der Getriebekomponente. Die zumindest eine Messgröße wird hierbei während des Betriebs des Getriebes erfasst, wobei ein dementsprechend ausgebildeter Sensor eingesetzt wird. Unter der Messgröße ist im Wesentlichen eine physikalische Größe zu verstehen, die eine verschleißinduzierende Wirkung auf die Getriebekomponente entfalten kann. In einem zweiten Schritt erfolgt ein Erfassen und/oder Ermitteln zumindest einer statistischen Größe zur zumindest einen Messgröße. Die statistische Größe kann wiedergeben, mit welcher Häufigkeit die zumindest eine Messgröße auf die Getriebekomponente einwirkt, über welche Zeitdauer, oder mit welcher Intensität über eine wählbare Zeitdauer hinweg. In einem dritten Schritt erfolgt ein Ermitteln einer abgeleiteten Zustandsgröße basierend auf der zumindest einen Messgröße und der zumindest einen statistischen Größe. Unter der abgeleiteten Zustandsgröße ist eine Größe zu verstehen, die sich nicht aus unmittelbarer Messung ermittelbar ist und zumindest zu einem Zeitpunkt den Zustand der Getriebekomponente darstellt. In einem vierten Schritt erfolgt ein Ausgeben der abgeleiteten Zustandsgröße, beispielsweise an einen Benutzer oder eine Datenverarbeitungseinheit. Alternativ oder ergänzend erfolgt ein Ausgeben einer Warnung, wenn die abgeleitete Zustandsgröße einen einstellbaren Schwellenwert übersteigt. Die abgeleitete Zustandsgröße wird dabei basierend auf der zumindest einen Messgröße und der zumindest einen statistischen Größe ermittelt. Der Schwellenwert kann durch eine Tabelle, einen Algorithmus und/oder eine Benutzereingabe eingestellt werden. Erfindungsgemäß sind die zumindest eine Messgröße und/oder die zumindest eine statistische Größe in einem Binning-Speicher, auch Bin Data Storage genannt, gespeichert.

Durch die Speicherung der zumindest einen Messgröße und/oder der zumindest einen statistischen Größe ist eine erhöhte Datenmenge in einfacher und speicherplatzsparender Weise speicherbar. Infolgedessen können für die zumindest eine Messgröße und/oder die zumindest eine statistische Größe über lange Zeitdauern große Datenmengen praktikabel erfasst werden. Dadurch, dass ein Binning-Speicher derartig kompakt ist, ist dieser unabhängig vom Befüllungszustand schnell durchsuchbar bzw. sortierbar. Darüber hinaus können Binning-Speicher je Messgröße bzw. statistischer Größe eine separate Dimension aufweisen. Zum Speichern von N Messgrößen und statistischen Größen kann der Binning-Speicher auch N-dimensional ausgebildet sein. Dementsprechend kann der Binning-Speicher gemäß einem Array in einer Programmiersprache, beispielsweise C, ausgebildet sein. Durch die Verwendung eines Binning-Speichers wird die Handhabung von großen Datenmengen, die beispielsweise in einem mehrjährigen Betrieb eines Getriebes generiert werden, vereinfacht werden. Dementsprechend kann eine erhöhte Datenmenge mit relativ geringer Rechenleistung ausgewertet werden.

In einer Ausführungsform des beanspruchten Verfahrens kann die abgeleitete Zustandsgröße in einem Binning-Speicher gespeichert werden. Dadurch können die abgeleiteten Zustandsgrößen, die als Ergebnisse oder Zwischenergebnisse des beanspruchten Verfahrens auffassbar sind, in genauso vorteilhafter Weise gespeichert werden wie die zumindest eine Messgröße und/oder die zumindest eine statistische Größe. Infolgedessen wird eine Verknüpfung zwischen der zumindest einen Messgröße bzw. der zumindest einen statistischen Größe und der abgeleiteten Zustandsgröße in eindeutiger und einfacher Weise ermöglicht.

Darüber hinaus kann zumindest einer der Binning-Speicher, die im beanspruchten Verfahren verwendet werden, als zumindest dreidimensionaler Binning-Speicher ausgebildet sein, also drei Speicherdimensionen aufweisen. Darunter ist ein Binning-Speicher zu verstehen, in dem drei unterschiedliche Informationen unabhängig voneinander speicherbar sind. Alternativ kann zumindest einer der Binning-Speicher auch höherdimensional, also im Wesentlichen vierdimensional bis zehndimensional, ausgebildet sein. Binning-Speicher sind in einfacher Weise für die Komplexität der jeweiligen Anwendung skalierbar. Je mehr Speicherdimensionen ein Binning-Speicher aufweist, umso komplexere Zusammenhänge sind in vorteilhafter Weise berechenbar. Dabei wird der Vorteil der einfach durchsuchbaren und kompakten Speicherung beibehalten, so dass das beanspruchte Verfahren auch mit relativ geringer Rechenleistung praxistauglich durchführbar ist.

Ferner können zumindest zwei Binning-Speicher, die im beanspruchten Verfahren eingesetzt werden, die gleiche Anzahl an Speicherdimensionen aufweisen. Dadurch können in eindeutiger Weise physikalische Zusammenhänge zwischen den entsprechenden Daten in den Binning-Speichern erzielt werden. Dies bietet ein hohes Maß an Konsistenz, und damit Robustheit gegen Fehler. Darüber hinaus sind die zwei Binning-Speicher derart über Matrizenoperationen miteinander verknüpfbar. Ergänzend können die zwei Binning-Speicher, die im beanspruchten Verfahren verwendet werden, die gleiche Rasterlänge aufweisen. Unter einer Rasterlänge ist die Anzahl an sogenannten Bins zu verstehen, die der Binning-Speicher in einer Speicherdimension aufweist. Dadurch wird die mathematische Verknüpfung der Binning-Speicher über Matrizenoperationen weiter vereinfacht. Matrizenoperationen sind auch auf einfacher Hardware schnell durchführbar. Dementsprechend wird durch das beanspruchte Verfahren die Bearbeitung von Datensätzen, die damit gewonnen werden, beschleunigt und vereinfacht.

Im beanspruchten Verfahren kann die zumindest eine Messgröße ein Drehmoment, eine Drehzahl, eine Temperatur, eine Kraft, eine Beschleunigung, eine Stromstärke, ein Schlupf, ein Druck, beispielsweise ein Bremsdruck, eine Windgeschwindigkeit, eine Windrichtung, eine Winkelposition einer Gondel oder eines Rotorblatts, eine Schmierstoffverunreinigung, ein Aktiv-Inaktiv-Wert der Windkraftanlange, oder ein Fehlercode sein. Beispielsweise werden Drehzahlen und Drehmomente von Getrieben in einer Vielzahl von Anwendungen ohnehin permanent erfasst. Genauso werden beispielsweise von Temperaturen von Schmierstoffen in zahlreichen Anwendungen überwacht. Für die genannten Messgrößen sind kompakte und zuverlässige Sensoren verfügbar, die ein exaktes Erfassen der entsprechenden Messgröße erlauben. Das beanspruchte Verfahren ist folglich mit geringem Aufwand in puncto Hardware umsetzbar und kann auch im Zuge einer Nachrüstung bei einem existierenden Getriebe eingerichtet werden. Des Weiteren nehmen derartige Messgrößen stets Werte an, die als ganze Zahlen oder Gleitkommazahlen speicherbar sind. Dadurch können bei einer rechnerischen Weiterverarbeitung mathematisch undefinierte Zustände oder Ergebnisse vermieden werden. Insbesondere sind dadurch beispielsweise beim Ermitteln der abgeleiteten Zustandsgröße Kollisionsabfragen entbehrlich, die dazu ausgebildet sind, mathematisch undefinierte Zustände abzufangen. Infolgedessen kommt das beanspruchte Verfahren mit relativ geringer Rechenleistung aus. Vorteilhafterweise wird als zumindest eine Messgröße eine Kombination aus einer Drehzahl, einem Drehmoment, einer Temperatur und einer Windgeschwindigkeit eingesetzt. Diese Kombination von Messgrößen bietet bei einem Minimum an Daten bereits eine erhöhte Aussagekraft für den Zustand der Windkraftanlagenkomponente.

In einer weiteren Ausführungsform des beanspruchten Verfahrens kann die zumindest eine statistische Größe eine absolute Häufigkeit, eine relative Häufigkeit, ein arithmetisches Mittel, ein geometrisches Mittel, ein Median, eine Zeitdauer, oder ein Modalwert sein. In Abhängigkeit von der zu ermittelnden abgeleiteten Zustandsgröße sind unterschiedliche statistische Größen notwendig. Das beanspruchte Verfahren ist dazu geeignet, dynamische statistische Größen, die sich während des Verfahrens ändern können, darzustellen und beim Ermitteln der abgeleiteten Zustandsgröße einzubeziehen. Infolgedessen ist das beanspruchte Verfahren an eine Vielzahl an zu ermittelnden abgeleiteten Zustandsgrößen, und damit Anwendungsfällen, anpassbar.

Des Weiteren kann im beanspruchten Verfahren die abgeleitete Zustandsgröße, die zu ermitteln ist, ein Schädigungsbeitrag oder eine Schädigungssumme sein. Ein Schädigungsbeitrag bzw. eine Schädigungssumme bilden den Schädigungsfortschritt bzw. Schädigungsfortschritt an der Getriebekomponente ab. Alternativ oder ergänzend kann die abgeleitete Zustandsgröße auch eine zu erwartende nutzbare Restlebensdauer der Getriebekomponente sein, die anhand des Schädigungsbeitrags und/oder der Schädigungssumme ermittelbar ist. Das beanspruchte Verfahren ist dazu geeignet, unterschiedliche schädliche Einwirkungen auf die Getriebekomponente differenziert zu erfassen. Durch die schnelle Durchsuchbarkeit von Binning-Speichern ist somit jederzeit ein Rückgriff auf Messgrößen und/oder statistische Größen aus der Vergangenheit möglich, um eine abgeleitete Zustandsgröße neu zu bestimmen. Beispielsweise können so neue Erkenntnisse über Schädigungsmechanismen auf das beanspruchte Verfahren übertragen werden. Das beanspruchte Verfahren ist damit in vielseitig und anpassbar.

Darüber hinaus können das Ermitteln der zumindest einen abgeleiteten Zustandsgröße und/oder das Ausgeben der abgeleiteten Zustandsgröße und/oder der Warnung anhand zumindest einer Typeninformation über die Getriebekomponente durchgeführt werden. Eine Typeninformation ist beispielsweise eine Größe der Komponente, eine Angabe über die Fertigungsart oder das eingesetzte Material, ein technischer Nennwert oder Grenzwert der Getriebekomponente, eine vorgesehene Maximalbenutzungsdauer, oder ein Schwellenwert, beispielsweise für eine maximal erträgliche Schädigung der Getriebekomponente. Durch das Einbeziehen von Typeninformation über die Getriebekomponente ist das beanspruchte Verfahren exakt anpassbar.

In einer weiteren Ausführungsform des beanspruchten Verfahrens erfolgt während des Schritts, in dem die zumindest eine abgeleitete Zustandsgröße ermittelt wird, dies durch eine Matrizenoperation des Binning-Speichers mit der zumindest einen Messgröße mit dem Binning-Speicher mit der zumindest einen statistischen Größe erfolgt. Matrizenoperationen können in einfacher Weise und nahezu in Echtzeit durchgeführt werden. Das beanspruchte Verfahren kann damit beispielsweise zu einer kontinuierlichen Zustandsüberwachung der Getriebekomponente eingesetzt werden. Dementsprechend kann beispielsweise in kritischen Betriebssituationen die Verfügbarkeit der Getriebekomponente in erhöhtem Maße ausgenutzt werden.

Ferner kann zumindest einer der Binning-Speicher einem neuronalen Netz zugeordnet sein. Dazu kann der Binning-Speicher mit einem neuronalen Netz verbunden sein, durch das die im Binning-Speicher gespeicherten Daten für den Betrieb des neuronalen Netzes nutzbar sind, beispielsweise für eine Mustererkennung. Ebenso können auch mehrere der Binning-Speicher dem neuronalen Netz zugeordnet sein. Durch die Verwendung der Binning-Speicher wird dem neuronalen Netz so eine Vielzahl an Eingabeinformationen in aufbereiteter, also im Wesentlichen sortierter Form, bereitgestellt. Alternativ kann ein Binning-Speicher, der im beanspruchten Verfahren verwendet wird, selbst Teil des neuronalen Netzes sein.

Die zugrunde Aufgabenstellung wird auch durch ein erfindungsgemäßes Computerprogrammprodukt gelöst. Das Computerprogrammprodukt ist zu einem Empfangen von Messwerten zumindest einer Messgröße und/oder zum Ermitteln von zumindest einer statistischen Größe der zumindest einen Messgröße ausgebildet. Das Computerprogrammprodukt ist auf einer Auswertungseinheit mit einem Speicher und einer geeigneten Recheneinheit ausführbar. Das Computerprogrammprodukt kann monolithisch oder modular ausgebildet sein, also auf einer Hardware als Ganzes, oder in interagierende Module aufgeteilt auf separater Hardware ausführbar ausgebildet sein. Das Computerprogrammprodukt kann ganz oder teilweise in Software, oder ganz oder teilweise festverdrahtet, also als Chip, FPGA, Mikrocontroller, oder integrierte Schaltung ausgebildet sein. Das Computerprogrammprodukt kann ferner in ausführbarer Form auf einem nichtflüchtigen Datenträger gespeichert sein. Ferner ist das Computerprogrammprodukt erfindungsgemäß dazu ausgebildet, zumindest eines der oben dargestellten Verfahren durchzuführen.

Ebenso wird die Aufgabenstellung durch eine erfindungsgemäße Auswertungseinheit gelöst, die einen Speicher und eine Recheneinheit aufweist, die zu einem Ausführen von Computerprogrammprodukten ausgebildet sind. Die Auswertungseinheit ist zu einem Empfangen von Messwerten zumindest einer Messgröße ausgebildet. Dazu kann die Auswertungseinheit mit geeigneten Sensoren koppelbar ausgebildet sein. Erfindungsgemäß ist die Auswertungseinheit mit einem Computerprogrammprodukt nach einer der oben skizzierten Ausführungsformen ausgestattet. Die Auswertungseinheit kann beispielsweise ein Leitrechner, eine Computer-Cloud, ein Entwicklerwerkzeug, oder ein mobiles Endgerät, wie beispielsweise ein Laptop, Tablet oder Smartphone sein.

Des Weiteren wird die Aufgabenstellung durch ein erfindungsgemäßes Getriebe gelöst. Das Getriebe umfasst eine Mehrzahl an Getriebekomponenten, wobei zumindest eine der Getriebekomponenten mit einem Sensor versehen ist. Mittels des Sensors ist zumindest eine Messgröße erfassbar und der Sensor ist mit einer Auswertungseinheit verbunden. Die Auswertungseinheit ist dem Getriebe zugeordnet, also mit dem Getriebe mittelbar oder unmittelbar verbunden sein. Beispielsweise kann die Auswertungseinheit am Getriebe befestigt sein oder in dessen Umgebung angeordnet sein. Erfindungsgemäß ist die Auswertungseinheit gemäß einer der oben skizzierten Ausführungsformen ausgebildet.

Gleichermaßen wird die beschriebene Aufgabe durch eine erfindungsgemäße Windkraftanlage gelöst. Die Windkraftanlage umfasst eine Gondel, an der drehbar ein Rotor angeordnet ist, der wiederum mit einem Antriebsstrang verbunden ist. Der Antriebsstrang umfasst eine Rotorwelle, die drehmomentübertragend mit einem Getriebe verbunden ist. Das Getriebe ist drehmomentübertragend mit einem Generator verbunden, wobei das Getriebe und der Generator auch zum Antriebsstrang gehören. Das Getriebe ist hierbei gemäß dem oben beschriebenen erfindungsgemäßen Getriebe ausgebildet.

Die eingangs skizzierte Aufgabenstellung wird auch durch eine erfindungsgemäße Verwendung des beschriebenen Verfahrens gelöst. Dazu wird ein Verfahren gemäß einer der oben dargestellten Ausführungsformen eingesetzt, um eine Getriebekomponente zu überwachen und korrespondierend dazu einen Datensatz über den Betrieb der Getriebekomponente bereitzustellen. Der Datensatz wird als Eingabe für eine Künstliche Intelligenz genutzt, die dazu ausgebildet ist, aus zumindest einer Messgröße, zumindest einer statistischen Größe und/oder zumindest einer abgeleiteten Zustandsgröße der Getriebekomponente eine Lebensdauerprognose für die Getriebekomponente durchzuführen. Dazu kann beispielsweise für die zumindest eine Messgröße, die zumindest eine statistische Größe und/oder die zumindest eine abgeleitete Zustandsgröße eine Mustererkennung durchzuführen. Der Datensatz, der durch eines der oben beschriebenen Verfahren erzeugt wird, wird als Eingabe genutzt, um die Künstliche Intelligenz zu trainieren, also zumindest eine grundlegende Prognosefähigkeit für die Windkraftanlagenkomponente zu erzeugen. Hierzu kann der Datensatz in statischer oder dynamischer Form bereitgestellt werden. Unter einer statischen Form ist zu verstehen, dass die einzelnen Daten in den jeweiligen Bins unveränderbar eingetragen sind. Im Gegensatz hierzu sind die Daten in den Bins in dynamischer Form während des Betriebs veränderbar. Dadurch, dass ein Datensatz, der mittels einem der oben skizzierten Verfahrens erzeugt ist, ist dieser in Binning-Speichern ausgebildet, also gespeichert, und deshalb schnell durchsuchbar. Infolgedessen ist der Datensatz zeitsparend wiederholt nach unterschiedlichen Aspekten durchsuchbar, sortierbar, filterbar, etc. Dementsprechend ist ein solcher Datensatz dazu geeignet, in einer Vielzahl von Wiederholungen eine Künstliche Intelligenz zu trainieren. Anhand der Ausführungsformen des skizzierten Verfahrens ist deshalb eine Künstliche Intelligenz in zeitsparender Weise trainierbar. Dementsprechend erreicht eine Künstliche Intelligenz, die mit einem oder mehreren Datensätzen trainiert werden, die mit einer Ausführungsform des beschriebenen Verfahrens erzeugt sind, in gleicher oder geringerer Zeit als bei bekannten Lösungen eine erhöhte Prognosegenauigkeit für die zu erwartende nutzbare Lebensdauer der Getriebekomponente. Das beanspruchte Verfahren erlaubt es, unterschiedliche Künstliche Intelligenzen für die entsprechenden Anwendungen zu trainieren und/oder zu erproben. Dadurch wird ein effizienterer Betrieb für Getriebekomponenten, und damit auch für deren Anwendungen, ermöglicht. Die Künstliche Intelligenz kann dabei als neuronales Netz oder als sogenannter Digitaler Zwilling ausgebildet sein und/oder Teil eines Digitalen Zwillings der Windkraftanlagenkomponente, des Getriebes, des Antriebsstrangs und/oder der Windkraftanlage ausgebildet sein. Alternativ oder ergänzend kann die Künstliche Intelligenz als Vorhersagemodell, wie ein Long-Short-Time-Memory-Netz, kurz LSTM-Netz, ausgebildet sein.

Die Erfindung wird im Folgenden anhand einzelner Ausführungsformen in Figuren näher erläutert. Die Figuren sind insoweit in gegenseitiger Ergänzung zu lesen, dass gleiche Bezugszeichen in unterschiedlichen Figuren die gleiche technische Bedeutung haben. Die Merkmale der einzelnen Ausführungsformen sind untereinander auch kombinierbar. Ferner sind die in den Figuren gezeigten Ausführungsformen mit den oben skizzierten Merkmalen kombinierbar. Es zeigen im Einzelnen:
- FIG 1: schematisch einen Ablauf einer ersten Ausführungsform des beanspruchten Verfahrens;
- FIG 2: schematisch eine Ausführungsform des beanspruchten Getriebes;
- FIG 3: schematisch eine geschnittene Schrägansicht einer Ausführungsform einer beanspruchten Windkraftanlage;
- FIG 4: schematisch eine Verwendung eines beanspruchten Verfahrens zum Trainieren einer Künstlichen Intelligenz.

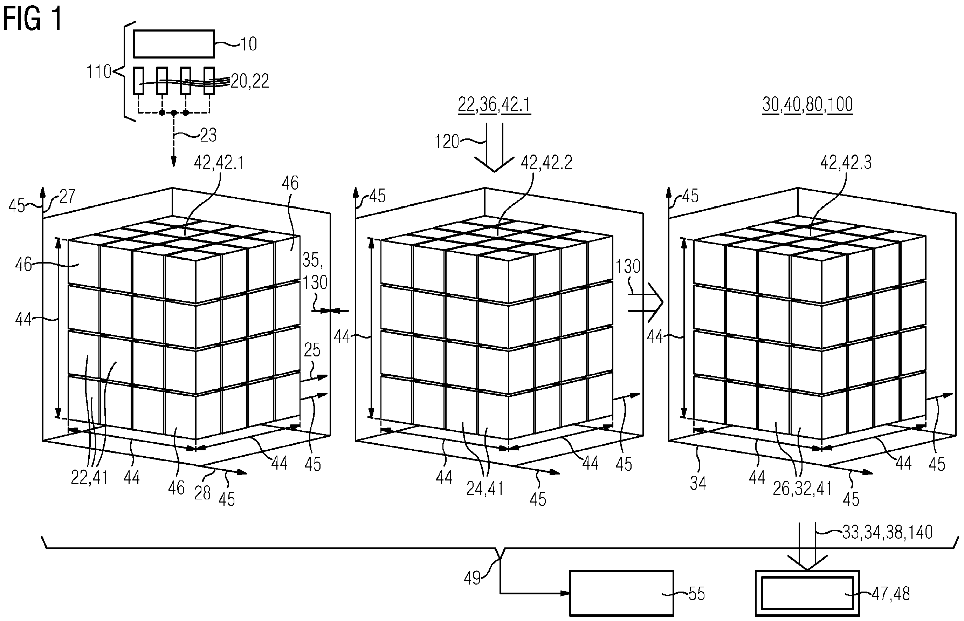

In FIG 1 ist schematisch ein Ablauf einer ersten Ausführungsform des beanspruchten Verfahrens 100 dargestellt, das mittels eines Computerprogrammprodukts 80 auf einer Auswertungseinheit 40 ausführbar ist. In einem ersten Schritt 110 erfolgt mittels Sensoren 20 ein Erfassen von mehreren Messgrößen 22, die als Messsignale 23 an die nicht näher dargestellte Auswertungseinheit 40 geleitet werden und in einem Binning-Speicher 42 gespeichert werden. Die Sensoren 20 sind zumindest einer Getriebekomponente 10 zugeordnet. Zu den erfassten Messgrößen 20 gehören ein Drehmoment 25 und eine Drehzahl 27, die an der Getriebekomponente 10 anliegen. Ebenso gehört zu den Messgrößen 20 ein Zeitstempel 28, der dem Drehmoment 25 und der Drehzahl 27 zugeordnet sind. Die Messgrößen 22 werden in einem ersten Binning-Speicher 42.1 gespeichert, der drei Speicherdimensionen 45 aufweist. Der erste Binning-Speicher 42.1 weist je Speicherdimension 45 eine Rasterlänge 44 auf, die mit der Anzahl an Elementen, sogenannten Bins 41, entlang einer Speicherdimension 45 entspricht, die in FIG 1 durch Würfel versinnbildlicht sind. Der erste Binning-Speicher 42.1 ist folglich durch ein sogenanntes Array einer Computersprache implementierbar. Durch die Rasterlänge 44 ist je Speicherdimension 45 ein Maximalwert 46 festgelegt, der im ersten Binning-Speicher 42.1 speicherbar ist. Korrespondierend zu den Messsignalen 23 wird der erste Binning-Speicher 42.1 mit Werten für die Messgrößen 22 belegt. Durch das Befüllen von Bins 41 mit Werten für die Messgrößen wird deren Datenvolumen im Wesentlichen konstant gehalten. Mit fortschreitender Dauer, mit der das Verfahren 100 durchgeführt wird, bleibt das Datenvolumen daher prognostizierbar, wodurch ein ausufernder Rechenaufwand vermieden wird.

In einem zweiten Schritt 120 erfolgt ein Ermitteln und/oder Erfassen zumindest einer statistischen Größe 24 anhand der Messgrößen 22, die im ersten Binning-Speicher 42.1 gespeichert sind. Die statistische Größe 24 kann dabei eine absolute Häufigkeit, eine relative Häufigkeit, ein arithmetisches Mittel, ein geometrisches Mittel, ein Median, oder ein Modalwert für die entsprechende Messgröße 22 sein. Die zumindest eine statistische Größe 24 kann dabei bezogen auf einen einstellbares Zeitfenster 36 ermittelt werden. Das Zeitfenster 36 kann dabei von einem Algorithmus, einer Künstlichen Intelligenz, und/oder einer Benutzervorgabe eingestellt werden. Korrespondierend zum ersten Binning-Speicher 42.1 wird die zumindest eine statistische Größe 24 in einem zweiten Binning-Speicher 42.2. gespeichert. Der zweite Binning-Speicher 42.2. entspricht in puncto Rasterlänge 44 und der Anzahl an Speicherdimensionen 45 dem ersten Binning-Speicher 42.1.

In einem dritten Schritt 130 erfolgt eine Matrizenoperation 35 mit dem ersten und dem zweiten Binning-Speicher 42.1, 42.1, durch die zumindest eine abgeleitete Zustandsgröße 26 ermittelt wird. Die abgeleitete Zustandsgröße 26 ist hierbei als Schädigungsbeitrag 32 im Rahmen eines Schadensakkumulationsmodells 30 ausgebildet. Korrespondierend zu vorliegenden Messgrößen 22 und deren Häufigkeit, die durch die entsprechende statistische Größe 24 dargestellt ist, ist so jeweils ein Schädigungsbeitrag 32 für die entsprechenden Beanspruchungen der Getriebekomponente 10 ermittelbar. Die zumindest eine abgeleitete Zustandsgröße 26 wird in einem dritten Binning-Speicher 42.3 gespeichert, der in puncto Rasterlänge 44 und Anzahl an Speicherdimensionen 45 mit dem ersten und zweiten Binning-Speicher 42.1, 42.2. übereinstimmt. Je Bin 41 ist im dritten Binning-Speicher 42.3 somit ein entsprechender Schädigungsbeitrag 32 abgespeichert, die wiederum zu einer Schadenssumme 34 im Rahmen des Schadensakkumulationsmodells 30 zusammenfassbar sind. Die Schadenssumme 34 stellt einen Schädigungsstand der Getriebekomponente 10 dar. Basierend hierauf ist eine zu erwartende nutzbare Lebensdauer der Getriebekomponente 10 ermittelbar. Ebenso ist ein Schädigungsgradient 33 ermittelbar, der eine aktuelle Geschwindigkeit des Fortschreitens der Schadenssumme 34 darstellt.

Das Verfahren 100 umfasst einen vierten Schritt 140, in dem der Schädigungsgradient 33, die Schadenssumme 34 und/oder zumindest ein Schädigungsbeitrag 32 als abgeleitete Zustandsgrößen 26 der Getriebekomponente 10 mittels einer Ausgabeeinheit 48 ausgegeben werden. Die Ausgabeeinheit 48 kann dazu als Anzeige für einen Benutzer ausgebildet sein, oder als Schnittstelle für eine Computerprogramm, beispielsweise eine Künstliche Intelligenz. Des Weiteren erfolgt im vierten Schritt 140 auch ein Ausgeben einer Warnung 47 über die Ausgabeeinheit 48, wenn ein einstellbarer Schwellenwert 38 überschritten ist. Der Schwellenwert 38 kann dabei mittels einer Benutzervorgabe oder durch einen Algorithmus, beispielsweise einer Künstlichen Intelligenz, eingestellt werden.

Der erste, zweite und dritte Binning-Speicher 42.1, 42.2, 42.3 bilden zusammen einen Datensatz 49, der detailliert einen Schädigungsvorgang an der Getriebekomponente 10 abbildet. Die Binning-Speicher 42.1, 42.2, 42.3 sind ein einfacher Weise, beispielsweise durch Matrizenoperationen 35 mathematisch verarbeitbar. Dementsprechend sind die Binning-Speicher 42.1., 42.2, 42.3 schnell durchsuchbar, sortierbar, filterbar und/oder weiter verarbeitbar. Dementsprechend ist der Datensatz 49 schnell durch eine Künstliche Intelligenz 55 verarbeitbar, die die dazu ausgebildet ist, eine Schädigung der Getriebekomponente 10 zu prognostizieren.

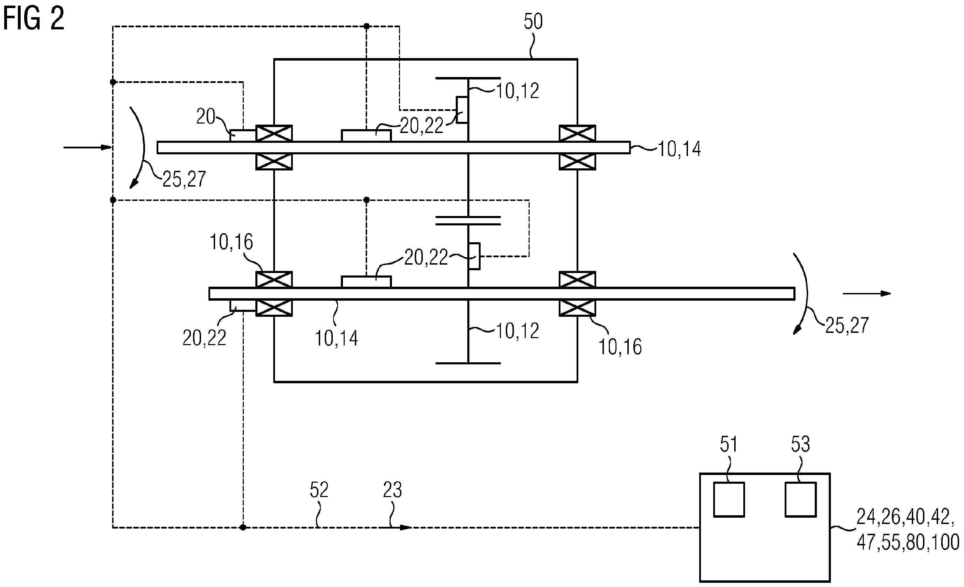

FIG 2 zeigt schematisch den Aufbau einer Ausführungsform eines beanspruchten Getriebes 50. Das Getriebe 50 umfasst eine Mehrzahl an Getriebekomponenten 10, die als Zahnräder 12, als Wellen 14 und als Lager 16 ausgebildet sind. An den Wellen 14 liegen jeweils ein Drehmoment 25 und eine Drehzahl 27 an, die als Messgrößen 22 erfasst werden. Dazu ist das Getriebe 50 mit einer Mehrzahl an Sensoren 20 ausgestattet, die den jeweiligen Getriebekomponenten 10, also den Zahnrädern 12, Wellen 14 und/oder Lagern 16 zugeordnet sind. Die Messgrößen 22 werden in Form von Messsignalen 23 an eine Auswertungseinheit 40 geleitet. Für die Messgrößen 22 wird korrespondierend durch ein Computerprogramprogrammprodukt 80 zumindest eine statistische Größe 24 ermittelt. Die Messgrößen 22 und die zumindest eine statistische Größe 24 werden jeweils in Binning-Speichern 42 gespeichert. Die Messgrößen 22 und die zumindest eine statistische Größe 24 eingesetzt, um zumindest eine abgeleitete Zustandsgröße 26 zu ermitteln, die auch in einem Binning-Speicher 42 abgespeichert wird. Die zumindest eine abgeleitete Zustandsgröße 26 ist ferner ausgebbar. Alternativ oder ergänzend ist auch eine Warnung 47 basierend auf der zumindest einen abgeleiteten Zustandsgröße ausgebbar. Dadurch wird zumindest teilweise ein Verfahren 100, wie beispielsweise in FIG 1 dargestellt, durch das Computerprogrammprodukt 80 umgesetzt. Das Computerprogrammprodukt 80 wird auf einer Auswertungseinheit 40 gespeichert und ausgeführt, die dazu über einen geeigneten Speicher 51 und eine geeignete Recheneinheit 53 verfügt. Die Auswertungseinheit 40 ist dem Getriebe 50 zugeordnet und zumindest über eine Kommunikationsverbindung 52 mit den Sensoren 20 verbunden, von denen zumindest einer der Getriebekomponenten 10 zugeordnet ist. Dadurch besteht über die Kommunikationsverbindung 52 eine Zuordnung und/oder Verbindung zwischen der Auswertungseinheit 40 und dem Getriebe 50. Die Kommunikationsverbindung 52 ist durch ein Datenkabel, beispielsweise ein Netzwerkkabel, eine Funkverbindung, oder durch eine Internetverbindung ausbildbar.

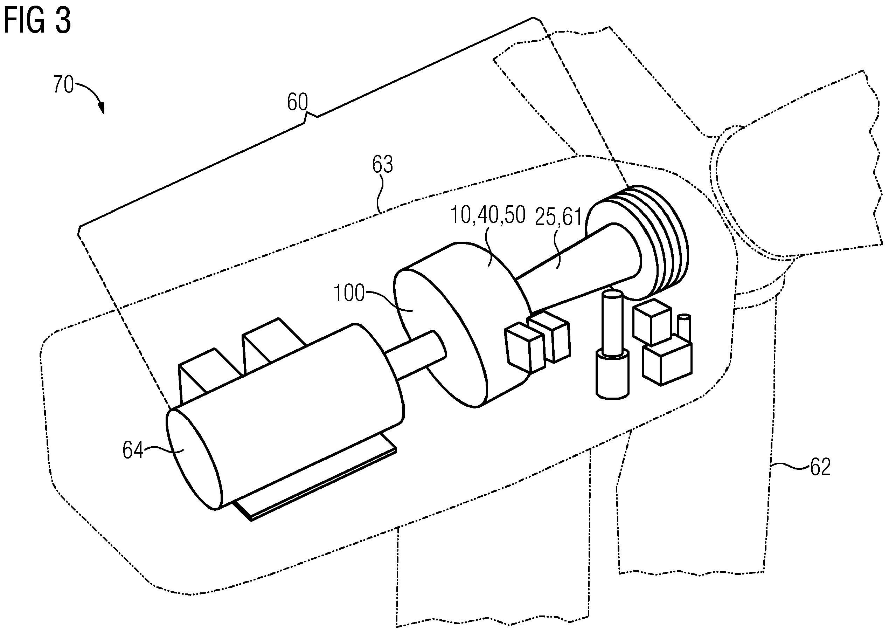

In FIG 3 ist schematisch der Aufbau einer Ausführungsform einer beanspruchten Windkraftanlage 70 dargestellt. Die Windkraftanlage 70 weist eine Gondel 63 auf, in der ein Antriebsstrang 60 angeordnet ist. Der Antriebsstrang 60 ist drehmomentübertragend mit einem Rotor 62 verbunden, der drehbar an der Gondel 63 angebracht ist. Eine Drehung des Rotors 62, und das entsprechende Drehmoment 25, werden über eine Rotorwelle 61 in den Antriebsstrang 60 eingeleitet. Neben der Rotorwelle 61 umfasst der Antriebsstrang 60 auch ein Getriebe 50, das wiederum mit einem Generator 64 verbunden ist. Das Getriebe 50 ist dabei mit einer Auswertungseinheit 40 ausgestattet, durch das zumindest eine Ausführungsform des oben beschriebenen Verfahrens 100 durchführbar ist. Durch das Verfahren 100 ist zumindest eine Getriebekomponente 10 des Getriebes 50 überwachbar, und dadurch eine zu erwartende nutzbare Restlebensdauer der entsprechenden Getriebekomponente 10 prognostizierbar.

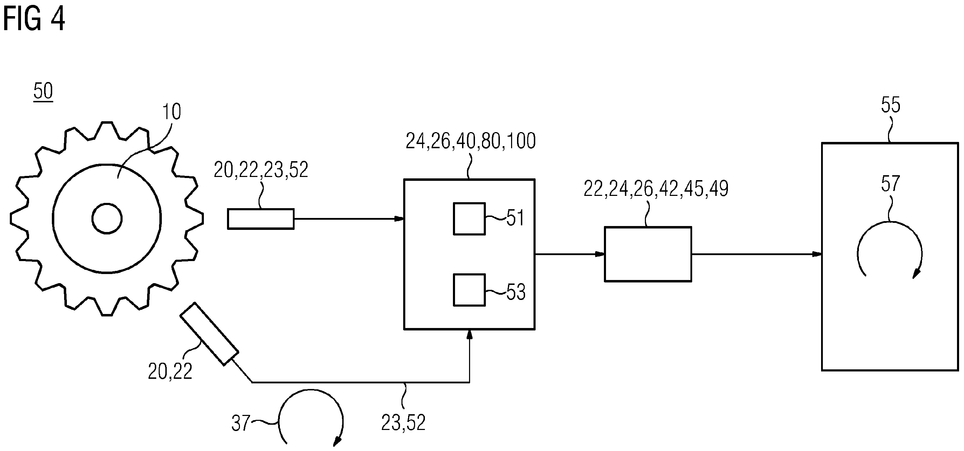

FIG 4 zeigt schematisch eine Verwendung einer Ausführungsform des beanspruchten Verfahrens 100, das zu einem Trainieren einer Künstlichen Intelligenz 55 eingesetzt wird. Dabei wird mittels Sensoren 20 eine Getriebekomponente 10 in einem Getriebe 50 überwacht, indem zumindest eine Messgröße 22 erfasst werden. Die Getriebekomponente 10 ist in FIG 4 durch ein Zahnrad symbolisiert, ist jedoch als jegliche Form von Getriebekomponente im Sinne des beanspruchten Verfahrens 100 aufzufassen. Die Messgrößen 22 werden in Form von Messsignalen 23 über eine Kommunikationsverbindung 52 an eine Auswertungseinheit 40 übertragen. Die Auswertungseinheit 40 ist mit einem Speicher 51 und deiner Recheneinheit 53 zur Ausführung eines Computerprogrammprodukts 80 ausgebildet. Mittels des Computerprogrammprodukts 80 ist zumindest eine Ausführungsform des skizzierten Verfahrens 100 ausführbar. Dabei wird zur mindestens einen Messgröße 22, die erfasst wird, zumindest eine statistische Größe 24 ermittelt. Basierend auf der zumindest einen erfassten Messgröße 22 und der zumindest einen statistischen Größe 24 wird eine abgeleitete Zustandsgröße ermittelt. Die zumindest eine Messgröße 22, die zumindest eine statistische Größe 24, und/oder die abgeleitete Zustandsgröße 26 sind dabei in einem oder mehreren Binning-Speichern 42 gespeichert. Dieser Vorgang wird über eine Betriebsdauer des Getriebes 50 wiederholt durchgeführt, was in FIG 4 durch den gebogenen Pfeil 37 versinnbildlicht ist. Basierend hierauf werden in einem oder mehreren Binning-Speichern 42 die genannten Größen gespeichert und zu einem Datensatz 49 zusammengefasst. Der Datensatz 49 wiederum wird der Künstlichen Intelligenz 55 als Eingabe zugeführt. Der Datensatz 49 dient als Grundlage für ein Trainieren 57 der Künstlichen Intelligenz 55, bei dem der Datensatz 49 wiederholt ausgewertet wird. Infolgedessen, dass die Binning-Speicher 42 kompakt sind, also wenig Speicherbedarf aufweisen, und schnell verarbeitbar sind, kann eine hohe Anzahl an Auswertungen des Datensatzes 49 durch die Künstliche Intelligenz 55 erfolgen. Dementsprechend kann ein umfassendes Trainieren 57 der Künstlichen Intelligenz 55 zeitsparend durchgeführt werden. Die Künstliche Intelligenz 55 ist dazu ausgebildet, basierend auf zugeführten Messgrößen 22 und/oder Datensätzen 49 die zu erwartende nutzbare Restlebensdauer einer Getriebekomponente 10 vorherzusagen. Folglich können mit der Künstlichen Intelligenz 55, beispielsweise nach einem Koppeln mit einem Getriebe 50 einer Windkraftanlage 70, nach kurzer Betriebsdauer aussagekräftige frühzeitige Prognosen für die zu erwartende nutzbare Restlebensdauer einer Getriebekomponente 10 getroffen werden. Dadurch wiederum wird die Planung von Wartungsarbeiten am entsprechenden Getriebe 50 vereinfacht.

## Patentansprüche

1. Verfahren (100) zur Überwachung einer Getriebekomponente (10), umfassend die Schritte:
a) Erfassen zumindest einer Messgröße (22) während eines Betriebs der Getriebekomponente (10);
b) Erfassen zumindest einer statistischen Größe (24) zu zumindest einer der Messgrößen (22);
c) Ermitteln zumindest einer abgeleiteten Zustandsgröße (26) der Getriebekomponente (10) mittels zumindest einer der Messgrößen (22) und der statistischen Größe (24);
d) Ausgeben der abgeleiteten Zustandsgröße (26) und/oder einer Warnung (47), wenn die abgeleitete Zustandsgröße (26) einen einstellbaren Schwellenwert (38) überschreitet;
wobei zumindest eine der Messgrößen (22) und/oder die statistische Größe (24) in einem Binning-Speicher (42) gespeichert wird.

2. Verfahren (100) nach Anspruch 1, **dadurch gekennzeichnet, dass** die abgeleitete Zustandsgröße (26) in einem Binning-Speicher (42) gespeichert wird.

3. Verfahren (100) nach Anspruch 1 oder 2, **dadurch gekennzeichnet, dass** zumindest einer der Binning-Speicher (42) zumindest drei Speicherdimensionen (45) aufweist.

4. Verfahren (100) nach einem der Ansprüche 1 bis 3, **dadurch gekennzeichnet, dass** zumindest zwei der Binning-Speicher (42) die gleiche Anzahl an Speicherdimensionen (45) aufweisen.

5. Verfahren (100) nach Anspruch 4, **dadurch gekennzeichnet, dass** die zumindest zwei Binning-Speicher (42) die gleiche Rasterlänge (44) aufweisen.

6. Verfahren (100) nach einem der Ansprüche 1 bis 5, **dadurch gekennzeichnet, dass** die zumindest eine Messgröße 22() ein Drehmoment (25), eine Drehzahl (27), eine Temperatur, eine Kraft, eine Stromstärke, ein Schlupf oder ein Druck ist.

7. Verfahren (100) nach einem der Ansprüche 1 bis 6, **da- durch gekennzeichnet**, dass die zumindest eine statistische Größe (24) eine absolute Häufigkeit, eine relative Häufigkeit, ein arithmetisches Mittel, eine Zeitdauer, ein geometrisches Mittel, ein Median, oder ein Modalwert ist.

8. Verfahren (100) nach einem der Ansprüche 1 bis 7, **dadurch gekennzeichnet, dass** die zumindest eine Zustandsgröße (24) ein Schädigungsbeitrag (32) oder eine Schädigungssumme (34) ist.

9. Verfahren (100) nach einem der Ansprüche 1 bis 8, **dadurch gekennzeichnet, dass** der Schritt c) und/oder d) anhand zumindest einer Typeninformation über die Getriebekomponente (10) durchgeführt wird.

10. Verfahren (100) nach einem der Ansprüche 1 bis 9, **dadurch gekennzeichnet, dass** im Schritt c) die zumindest eine abgeleitete Zustandsgröße (26) anhand einer Matrizenoperation des Binning-Speichers (42) mit der zumindest einen Messgröße (22) und des Binning-Speichers (42) der zugehörigen statistischen Größe (24) ermittelt wird.

11. Computerprogrammprodukt (80), das zum Empfangen von Messwerten (23) zumindest einer Messgröße (22) und zu einem Empfangen und/oder Ermitteln einer statistischen Größe (24) der zumindest einen Messgröße (22) ausgebildet ist, **dadurch gekennzeichnet, dass** das Computerprogrammprodukt (80) zum Durchführen eines Verfahrens (100) nach einem der Ansprüche 1 bis 10 ausgebildet ist.

12. Auswertungseinheit (40) für ein Getriebe (50), die einen Speicher (51) und eine Recheneinheit (53) aufweist, und zu einem Empfangen von zumindest einer Messgröße (22) ausgebildet ist, wobei mittels der Recheneinheit (53) und des Speichers (51) ein Computerprogrammprodukt (80) ausführbar ist, **dadurch gekennzeichnet, dass** das Computerprogrammprodukt (80) nach Anspruch 11 ausgebildet ist.

13. Getriebe (50), umfassend eine Mehrzahl an Getriebekomponenten (10), wobei an mindestens einer Getriebekomponente (10) mittels eines Sensors (20) zumindest eine Messgröße (22) erfasst wird, der mit einer Auswertungseinheit (40) verbunden ist, die dem Getriebe (22) zugeordnet ist, **dadurch gekennzeichnet, dass** die Auswertungseinheit (40) nach Anspruch 12 ausgebildet ist.

14. Windkraftanlage (70), umfassend eine Gondel (63), in der ein Antriebsstrang (60) aufgenommen ist und der mit einem Rotor (62) verbunden ist, und der Antriebsstrang (60) ein Getriebe (50) umfasst, **dadurch gekennzeichnet, dass** das Getriebe (50) nach Anspruch 13 ausgebildet ist.

15. Verwendung eines Verfahrens (100) zur Überwachung einer Getriebekomponente (10) zum Trainieren einer Künstlichen Intelligenz (55), wobei das Verfahren (100) nach einem der Ansprüche 1 bis 10 ausgebildet ist.
